# EUROPEAN PATENT APPLICATION

(11) **EP 3 279 058 A1**
(43) Date of publication of application: **07.02.2018**
(21) Application number: 15887102.0
(22) Date of filing: 01.07.2015
(51) Int. Cl.: B62B 5/02

(54) **WHEEL-STAGGERED STAIRWAY-CLIMBING VEHICLE**

(30) Priority: 02.04.2015 CN 201510151140
(71) Applicant: Onostar Technologies Co., Ltd., Guangzhou, Guangdong 510730 (CN)
(72) Inventor: CAI, Weizhong, Guangzhou Guangdong 510730 (CN)
(74) Representative: Cabinet Bleger-Rhein-Poupon
(86) International application number: PCT/CN2015/083016
(87) International publication number: WO 2016/155135

(57) **Abstract**

The present invention proposes a wheel-alternate stair climbing cart which at least has one row of wheels (has two or more rows of wheels best). Each row comprises a plurality of wheels. Two adjacent groups of wheels are intersected. The total length formed by connecting axle centers of a plurality of wheels can at least cross a vertex of three steps. The wheels on the stair at least keep contact with a vertex of two steps. The present invention better solves the problem that a traditional cart is blocked when operating on the stair or is bumpy when moving, and has the advantages of strong weight loading capability, difficult wear and low manufacturing cost.

## Description

### Technical Field

The present invention relates to a wheel-alternate stair climbing cart, which can be freely, stably and smoothly operated on the stair or flat ground and has better weight loading capability.

### Background

When there is no elevator (for example, low buildings generally have no elevator) and goods need to be transported upstairs and downstairs, if the goods are transported by means of manpower, large labor amount will be required and the labor is slow and strenuous. Thus, various stair climbing carts are designed by somebody. But the existing stair climbing carts on the market have many defects, so they cannot by accepted by users or popularized.

For example, a common stair climbing cart in which three or four small wheels surround a rotating shaft almost cannot be smoothly operated on the stair, are still seriously bumpy during operation and especially cannot conveniently cross those higher or lower stairs or are bumpy more seriously. That is, the stair climbing capability is limited. Due to small wheels for weight loading, the weight loading capability is certainly small.

A crawler-type stair climbing cart is also designed by some people, but the gap between the wheels is not really eliminated by this mode and this cart is still bumpy when moving on the stair. Moreover, the crawler belt is easy to damage and has poor weight loading capability.

### Summary

The purpose of the present invention is to provide a stair climbing cart, which can be freely, smoothly and lightly operated on the stair and has better weight loading capability.

To achieve the above technical solution, the present invention provides a wheel-alternate stair climbing cart which at least has one row of wheel sets (has two or more rows of wheel sets best). Each row comprises a plurality of wheel sets. Two adjacent wheel sets are intersected. The total length formed by connecting axle centers of a plurality of wheel sets can at least cross a vertex of three steps. The wheels on the stair at least keep contact with a vertex of two steps.

Adjacent wheels are intersected (namely, the external diameters of the wheels are intersected from the perspective of a side view), so that the wheels cannot be blocked by the steps when moving on the stair (because after the wheels are intersected, there is no gap below the wheels).

The sizes of the wheels of the wheel sets can be adjusted properly and the wheels are changeable in size and number. But the total length formed by all the wheels can at least cross the vertex of three steps so as to ensure that the cart always at least keeps contact with the vertex of two steps when operating on the stair for achieving that a parallel straight line is formed by two points on the vertex of the steps of the stair and two points in the wheels, so that the stair climbing cart is smooth during climbing, thereby solving the current situation that the stair climbing cart in the prior art is greatly bumpy when climbing the stair.

Compared with the prior art, the present invention better solves the problem that a traditional cart is blocked when operating on the stair or is bumpy when moving, and has the advantages of strong weight loading capability, difficult wear and low manufacturing cost.

### Description of the Drawings

To more clearly describe the technical solutions in the embodiments of the present invention or in the prior art, the drawings required to be used in the description of the embodiments or the prior art will be simply presented below. Obviously, the drawings in the following description are merely some embodiments of the present invention, and for those skilled in the art, other drawings can also be obtained according to the drawings without contributing creative labor.
Figure 1 is a principle diagram of an alternate stair climbing cart provided by the present invention; and
Figure 2 is a schematic diagram of a plane structure of an alternate stair climbing cart provided by the present invention.

### Detailed Description

The technical solutions in the embodiments of the present invention will be clearly and fully described below with combination of the drawings in the embodiments of the present invention. Obviously, the described embodiments are merely part of the embodiments of the present invention, not all of the embodiments. Based on the embodiments in the present invention, all other embodiments obtained by those skilled in the art without contributing creative labor will belong to the protection scope of the present invention.

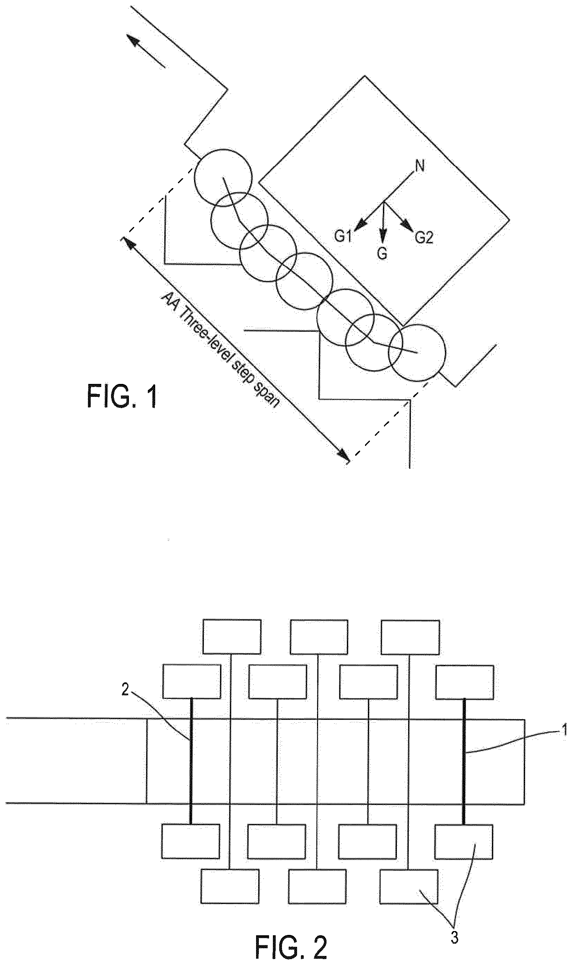

As shown in Figures 1-2, the stair climbing cart provided by the present invention at least has one row of wheels. Each row of wheels comprises a plurality of wheel sets. Two adjacent wheel sets are intersected. The first wheel set 1 and the last wheel set 2 in a plurality of wheel sets are curled up. The wheel axle of the last pair of wheel sets is thicker than that of other wheel sets. The wheel set refers to two wheels on both ends of the same axle.

As shown in Figures 1-2, the stair climbing cart provided by the present invention has a left and a right rows of wheels. Each row comprises a plurality of wheels. Except a head wheel set and a tail wheel set, adjacent wheels 3 in any other two sets are intersected (namely, the projections of the external diameters of the wheels are intersected). The total length formed by all the wheels can cross the vertex of three steps. The first pair of wheels and the last pair of wheels are slightly curled up. The wheel axle of the last pair of wheels is thicker relatively.

As shown in Figures 1-2, in the process of climbing the stair, the motion track of the stair climbing cart is a micro wavy curve formed along the bottom of numerous wheels for operation. The cart is smoothly operated (the smooth degree is affected by the gap size between the wheels; the gap size is in direct proportion to the wheel center distance and in inverse proportion to the wheel radius; and the size and the number of the wheels can be determined according to applied actual demands). Further, a main body (frame) of the stair climbing cart provided by the present invention can be set as a flexible structure so as to adapt to the requirements of different stair spans through the adjustment of length of the cart body.

From the force analysis, the stair climbing cart and carried heavy objects are subject to the action of gravity; the gravity is decomposed into the pressure on the stair and downward sliding force along the stair. Meanwhile, the stair also generates supporting force on the cart, and the supporting force and the pressure decomposed from the gravity on the stair are offset. When the stair climbing cart is used, upward force along the stair is exerted thereon, so as to operate the stair climbing cart on the stair, thereby saving labor. But when the stair climbing cart is operated on the flat ground, because the cart always keeps that one or more pairs of wheels are on the ground, the cart can be operated only with push-pull force without lifting force, thereby also saving labor.

The realization of the stair climbing cart is related to the purpose. Different structural shapes and requirements are required in different applications. Human features shall be considered so that the stair climbing cart can be used more conveniently. Auxiliary devices are added and some structures are changed so that the center of gravity is proper and the objects can be transported stably with less labor.

Based on the above requirements, the following necessary data are counted: general human height: 1.50-1.80 meters; general height from human hands to the ground: 0.55-0.75 meter; general half step length of people in walking: 0.33 meter; stair width: 1.2 meters (residence)-1.8 meters (public place); general height of each step of the stair: 0.10-0.20 meter (commonly 0.125 meter); general depth of each step: 0.25-0.35 meter (commonly 0.315 meter); and span length of the vertex of three steps: 0.5-0.7 meter.

Based on the above data, the appropriate length of the stair climbing cart is more than 1.2 meters, wherein the total length formed by a plurality of groups of wheels must be greater than 0.7 meter. If the wheel diameter is 0.12 meter and the distance between the centers of adjacent wheels is 0.1 meter, at least 7 pairs of wheels are needed. Of course, the above sizes are not absolute and can be determined according to practical situations and application needs.

The wheel-alternate stair climbing cart provided by the present invention can enable the work of transporting the heavy objects upstairs and downstairs to become convenient and labor saving. In addition, the structure can also be used for wheelchairs, sports utility vehicles, tanks, etc.

The above is just preferred embodiments of the present invention and is not intended to limit the present invention. Any modification, equivalent replacement, improvement, etc. made within the spirit and the principle of the present invention shall be contained within the protection scope of the present invention.

## Claims

1. A wheel-alternate stair climbing cart, which is **characterized by** at least comprising one row of wheels; each row of wheels comprises a plurality of wheel sets; two adjacent wheel sets are intersected; the total length formed by connecting axle centers of a head wheel set and a tail wheel set can at least cross a vertex of three steps; and the wheel sets on the stair at least keep contact with a vertex of two steps.

2. The alternate stair climbing cart according to claim 1, which is **characterized in that** the first wheel set and the last wheel set in a plurality of wheel sets are curled up.

3. The alternate stair climbing cart according to claim 1, which is **characterized in that** the wheel axle of the last pair of wheel sets is thicker than that of other wheel sets.
